# EUROPEAN PATENT APPLICATION

(11) **EP 0 768 540 A1**
(43) Date of publication of application: **16.04.1997**
(21) Application number: 96116150.2
(22) Date of filing: 09.10.1996
(51) Int. Cl.: G01S 13/02

(54) **Transponder system and method**

(30) Priority: 11.10.1995 US 5094
(71) Applicant: TEXAS INSTRUMENTS DEUTSCHLAND GMBH, 85356 Freising (DE)
(72) Inventor: Schuermann, Josef H., 8051 Oberhummel (DE)
(74) Representative: Schwepfinger, Karl-Heinz, Dipl.-Ing.

(57) **Abstract**

A transponder system (8) includes a reader (10) that interrogates transponders (12, 14, 16) operating in full or half duplex and using different protocols. The reader (10) includes a transmitter (18), an antenna (30), a receiver (36), and a controller (42). Each of the transponders (12, 14, 16) include a controller (60) and antenna circuitry (52, 54, 56, 58, 64) for receiving an exciter signal from the reader (10) and generating a modulated signal.

## Description

### TECHNICAL FIELD OF THE INVENTION

The present invention relates in general to communications, and more particularly to a transponder system and method.

### BACKGROUND OF THE INVENTION

A transponder system typically includes a reader or base station that can interrogate and receive responses from one or more transponders. The reader generates an exciter signal that complies with the protocol of the interrogated transponder. The interrogated transponder recognizes the exciter signal complying with its protocol and responds accordingly. However, as more transponder systems are developed, different interrogation protocols may be used for different transponders.

### SUMMARY OF THE INVENTION

From the foregoing, it may be appreciated that a need has arisen for a reader that may interrogate and receive responses from a variety of transponders operating with different protocols.

In accordance with one embodiment of the present invention, a transponder system includes a reader operable to transmit a selected one of a first exciter signal and a second exciter signal. A first transponder located in spaced relation to the reader is operable to receive the first exciter signal and transmit a first modulated signal in response to the first exciter signal. A second transponder located in spaced relation to the reader is operable to receive the second exciter signal and transmit a second modulated signal in response to the second exciter signal. The reader is operable to receive the first modulated signal and the second modulated signal.

The present invention provides various technical advantages over conventional transponder systems. For example, the transponder system allows a single reader to interrogate and receive responses from a variety of transponders operating with different protocols. In one embodiment of the present invention, this is accomplished by sequentially transmitting different responder exciter signals from the reader. Such an operation allows the reader to interoperate with a number of different transponders. Another technical advantage is the ability to interrogate transponders operating in both half and full duplex. Other technical advantages are readily apparent to one skilled in the art from the following figures, and the corresponding description.

### BRIEF DESCRIPTION OF THE DRAWINGS

For a more complete understanding of the present invention and for further features and advantages, reference is now made to the following description taken in conjunction with the accompanying drawings, in which:
FIGURE 1 illustrates a transponder system;
FIGURE 2 illustrates a flow chart of a method for operating a reader in the transponder system; and
FIGURE 3 illustrates the timing relationship among components in the transponder system.

### DETAILED DESCRIPTION OF THE INVENTION

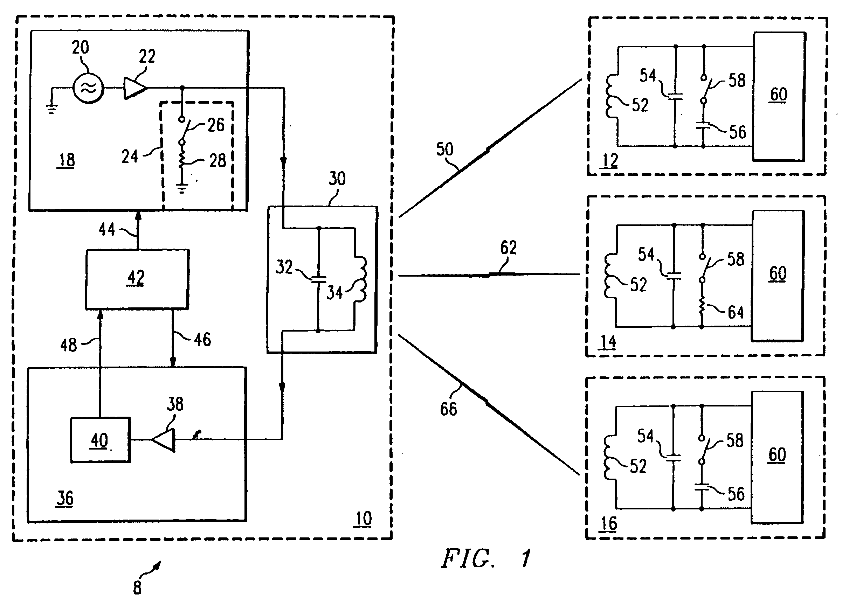

FIGURE 1 illustrates a transponder system 8. The basic operation of transponder system 8 can be found in U.S. Patent No. 5,053,774 issued October 1, 1991 to Schuermann, et al., entitled "Transponder Arrangement".

Transponder system 8 includes a reader 10 and transponders 12, 14, and 16. In general, reader 10 interrogates transponders 12, 14, and 16 with an appropriate exciter signal that complies with the protocol of transponders 12, 14, and 16. Transponders 12, 14, and 16 receive the exciter signal and transmit identification data or other information to reader 10.

Reader 10 includes a transmitter 18 that generates different exciter signals that correspond to different transponder protocols. Transmitter 18 comprises a local oscillator 20 coupled to an amplifier 22. Loading circuitry 24 couples to the output of amplifier 22 and includes in series a switch 26 coupled to a resistor 28, which in turn couples to electrical ground.

The output of transmitter 18 couples to antenna 30, which includes a capacitor 32 and a coil 34 arranged in parallel. The values of capacitor 32 and coil 34 are selected to achieve resonance tuning of antenna 30 at a selected frequency. Antenna 30 operates to both transmit and receive radio frequency (RF) signals.

Receiver 36 couples to antenna 30 and includes an amplifier 38 and a demodulator 40. Receiver 36 can be a broadband receiver or may include filtering components to limit reception to a selected range of frequencies. Demodulator 40 extracts data from modulated signals received at antenna 30. The modulated signals include identification data or other information from transponders 12, 14, and 16 modulated in amplitude, phase, or frequency.

Coupled to transmitter 18 and receiver 36 is controller 42, which includes both processing and memory circuitry. Controller 42 controls the operation of local oscillator 20, amplifier 22, and loading circuitry 24 of transmitter 18 using control line 44. Controller 42 also controls operation of amplifier 38 and demodulator 40 using control line 46. Data recovered from modulated signals received at antenna 30 are coupled to controller 42 using data line 48.

Transponder 12 interacts with reader 10 using link 50. Transponder 12 includes a coil 52 coupled in parallel with a capacitor 54 that together determine the resonant tuning frequency of transponder 12. The antenna formed by coil 52 and capacitor 54 operate to receive signals from and transmit signals to antenna 30 of reader 10. An additional capacitor 56 couples in series to switch 58, and together capacitor 56 and switch 58 are arranged in a parallel relationship with coil 52 and capacitor 54. A controller 60 of transponder 12 includes both processing and memory circuitry. Controller 60 generates identification data and other information for transmission to reader 10 and controls the operation of switch 58.

Transponder 14 interacts with reader 10 using link 62 and includes several similar components as transponder 12. Transponder 14, however, replaces capacitor 56 of transponder 12 with a resistor 64. Also, as will be appreciated below, transponder 14 may operate in a full duplex manner by simultaneously receiving and transmitting signals using link 62.

Transponder 16 interacts with reader 10 using link 66. Transponder 16 is similar in construction to transponder 12, but utilizes a different interrogation and response protocol.

In operation of transponder system 8, reader 10 generates a variety of different exciter signals to interrogate transponders 12, 14, and 16 operating with different protocols. Each exciter signal can be characterized by a signal having a selected frequency, duration, or amplitude and which may be modulated in amplitude, phase, or frequency. Each transponder 12, 14, and 16 may have a different protocol that recognizes and responds to a specific exciter signal generated by reader 10.

Exciter signal characteristics are chosen based on the design and operating characteristics of its associated transponder. For example, transponder 12 implements a backscatter or ringing response technique that successively transmits small bursts of information in response to a short pulse exciter signal transmitted by reader 10. Transponder 16 receives a long exciter signal that provides energy to transmit a single burst of data after the exciter signal. Transponder 14 is similar in operation to transponder 16, but utilizes a full duplex technique that begins sending data while still receiving an exciter signal. Transponders 12, 14, and 16 are exemplary, and the present invention contemplates any transponder design and protocol to communicate with reader 10.

An exciter signal is initiated at local oscillator 20 of transmitter 18. In one embodiment, local oscillator 20 generates signals at the same frequency as the resonant tuning frequency of antenna 30. The signal generated by local oscillator 20 passes to amplifier 22 for amplification.

Loading circuitry 24 allows transmitter 18 to adjust the quality of antenna 30. To generate a short pulse exciter signal, such as an exciter signal of one or a few cycles to interrogate transponder 12, controller 42 closes switch 26 and resistor 28 operates to suppress the ringing or flywheel effect of antenna 30. To generate an exciter signal of many cycles to interrogate transponders 14 and 16, controller 42 opens switch 26 and the full quality of antenna 30 is utilized. Controller 42 controls local oscillator 20, amplifier 22, and switch 26 to generate an exciter signal with the selected frequency, duration, and amplitude. The exciter signal passes to antenna 30 for transmission to transponders 12, 14, and 16, as shown by links 50, 62, and 66, respectively.

Transponder 12 receives the exciter signal over link 50 using the antenna comprised of coil 52 and capacitor 54. Coil 52 and capacitor 54 of transponder 12 may be chosen with the same values as coil 34 and capacitor 32 of reader 10. If the exciter signal received by transponder 12 is the proper protocol, then controller 60 responds by causing transmission of a modulated signal to reader 10 using link 50. Controller 60 modulates identification data or other information by operating switch 58. When switch 58 is open, transponder 12 transmits a signal to reader 10 at a first frequency determined by coil 52 and capacitor 54. When switch 58 is closed, transponder 12 transmits a signal to reader 10 at a second frequency determined by coil 52 and the sum of the capacitance of capacitors 54 and 56. In this manner, transponder 12 modulates the data sent to reader 10 using a frequency shift keying (FSK) technique.

Transponder 14 also responds to an appropriate exciter signal by operating switch 58 to modulate information transmitted to reader 10. However, transponder 14 utilizes an amplitude modulation technique to generate the modulated signal. When switch 58 is open, transponder 14 transmits a signal to reader 10 at full amplitude. When switch 58 is closed, resistor 64 couples in parallel to coil 52 and capacitor 54 and transponder 14 transmits a signal at reduced amplitude. When operating in full duplex, transponder 14 transmits amplitude modulated information to reader 10 simultaneously with the reception of an exciter signal.

Like transponder 12, transponder 16 responds with an FSK modulated signal when it receives an appropriate exciter signal from reader 10.

Antenna 30 of reader 10 receives modulated signals from transponders 12, 14, and 16 and passes these signals to receiver 36. Amplifier 38 amplifies the modulated signals and passes them to demodulator 40. After performing frequency, amplitude, or phase demodulation, demodulator 40 passes the recovered data over data line 48 to controller 42. The data may then be stored locally or remotely by controller 42 for later access and processing.

FIGURE 2 illustrates a flow chart of a method for operating reader 10 in transponder system 8. Reader 10 transmits a first exciter signal (block 100). The first exciter signal is in the protocol that corresponds to transponder 12. If transponder 12 is within the interrogation range of reader 10 and responds to the first exciter signal (block 102), then reader 10 receives a modulated signal from transponder 12 (block 104). Reader 10 continues to transmit the first exciter signal (block 100) and receive a modulated signal from transponder 12 (block 104) until no response is received.

If reader 10 does not receive a response to the first exciter signal (block 102), then reader 10 transmits a second exciter signal (block 106). In one embodiment, the second exciter signal may be compatible with both transponder 14 operating in fuel duplex and transponder 16 operating in half duplex. If transponder 14 is within interrogation range and recognizes the second exciter signal, then transponder 14 responds while still receiving the second exciter signal (block 108). Reader 10 receives the modulated signal from the second transponder (block 110) and returns to transmit the first exciter signal (block 100) when finished.

If transponder 16 is within interrogation range and recognizes the second exciter signal, then transponder 16 may respond in a half duplex manner after transmission of the second exciter signal is complete (block 112). Reader 10 receives a modulation signal from the third transponder (block 114) and returns to transmit the first exciter signal (block 100) when finished.

Therefore, by sequentially transmitting the first exciter signal (block 100) and the second exciter signal (block 106), reader 10 may interrogate and receive responses from transponders 12, 14, and 16 operating at both full and half duplex and using different protocols.

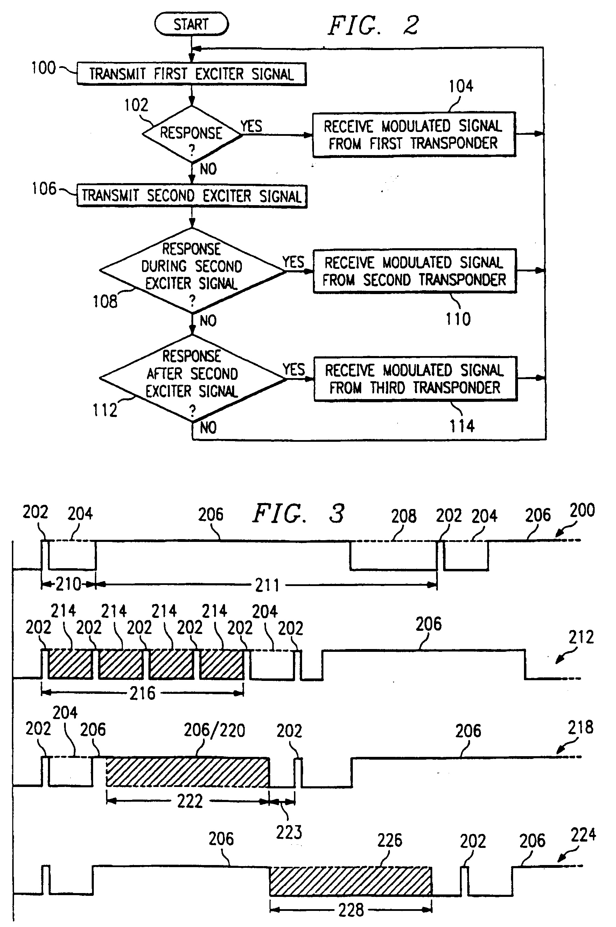

FIGURE 3 illustrates the timing relationship among components in transponder system 8. Trace 200 illustrates the timing relationship when reader 10 receives no responses from transponders 12, 14, or 16. Reader 10 transmits a first exciter signal 202 of short duration intended for transponder 12. Since no response is received during a silent response period 204, reader 10 transmits a second exciter signal 206 of long duration intended for transponders 14 and 16. After the silent response period 208 associated with the second exciter signal 206, reader 10 transmits the first exciter signal 202 again. Reader 10 repeats this process until it receives a response from transponders 12, 14, or 16.

The first exciter signal 202 and its associated silent response period 204 together comprise a cycle time 210 for interrogating transponder 12. The second exciter signal 206 and its corresponding silent response time 208 together comprise the cycle time 211 for interrogating transponders 14 and 16. In this embodiment, cycle time 210 is shorter than cycle time 211 due to the different operations of transponders 12, 14, and 16.

Trace 212 illustrates an interrogation and response sequence between reader 10 and transponder 12. In this case, first exciter signal 202 is immediately followed by a response 214 from first transponder 12. Reader 10 continues to issue first exciter signals 202 for as long as transponder 12 continues to respond. Upon encountering silent response period 204, reader 10 transmits second exciter signal 206 to transponders 14 and 16. In one embodiment, each response 214 of transponder 12 represents a bit of data for transmission to reader 10. For example, first exciter signal 202 may represent a single cycle transmitted by reader 10, and each response 214 from transponder 12 represents several cycles at a first or second frequency depending on the position of switch 58 of transponder 12. The series of first exciter signals 202 followed by responses 214 represents a data telegram 216 issued by transponder 12.

Trace 218 illustrates an interrogation and response sequence between reader 10 and transponder 14. Reader 10 transmits first exciter signal 202 which is followed by silent response period 204. Reader 10 begins to transmit second exciter signal 206. After receiving several cycles of second exciter signal 206, transponder 14 operating in full duplex is sufficiently energized to begin responding while still receiving second exciter signal 206. The response time 220 of transponder 14 may terminate with the termination of second exciter signal 206. However, in the case where transponder 14 may be powered at least in part by a battery or other local power source, the response time 220 may extend beyond termination of second exciter signal 206. The second exciter signal 206, the response period 220, or both may be present during the period designated as 206/220 depending upon the particular operation of transponder 14.

In one embodiment, transponder 14 performs amplitude modulation on the data sent to reader 10 by operating switch 58. The response period 220 represents a data telegram 222 issued by transponder 14. Following the response period 220, reader 10 may detect a response from transponder 16 during period 223, as described below with reference to trace 224. If no response is received from transponder 16 during this period, then reader 10 continues the sequence of transmitting first exciter signal 202 and second exciter signal 206.

Trace 224 illustrates an interrogation and response sequence between reader 10 and transponder 16. Unlike transponder 14, transponder 16 operates at half duplex and begins responding after the termination of second exciter signal 206. Transponder 16 generates a response 226 by operating switch 58 to FSK modulate its transmitted information. The complete response represents a data telegram 228 issued by transponder 16.

Although the present invention has been described with several embodiments, a myriad of changes, variations, alterations, transformations, and modifications may be suggested to one skilled in the art, and it is intended that the present invention encompass such changes, variations, alterations, transformations, and modifications.

## Claims

1. A transponder system, comprising:
a reader operable to transmit a selected one of a first exciter signal and a second exciter signal;
a first transponder located in spaced relation to the reader, the first transponder operable to receive the first exciter signal and to transmit a first modulated signal in response to the first exciter signal;
a second transponder located in spaced relation to the reader, the second transponder operable to receive the second exciter signal and to transmit a second modulated signal in response to the second exciter signal; and
the reader operable to receive the first modulated signal and the second modulated signal.

2. The transponder system as claimed in Claim 1, wherein:
the first exciter signal comprises a fixed frequency signal of a first duration; and
the second exciter signal comprises a fixed frequency signal of a second duration, the second duration being greater than the first duration.

3. The transponder system as claimed Claim 1 or Claim 2, wherein the reader alternately transmits the first exciter signal and the second exciter signal.

4. The transponder system as claimed in any preceding claim further comprising; a third transponder operable to receive the second exciter signal and to begin transmission of a third modulated signal while receiving the second exciter signal.

5. The transponder system as claimed in any preceding claim wherein the first modulated signal and the second modulated signal are frequency modulated.

6. The transponder system as claimed in any preceding claim, wherein the reader successively transmits the first exciter signal after receiving the first modulated signal.

7. The transponder system as claimed in any preceding claim, wherein the reader transmits the second exciter signal after receiving the second modulated signal.

8. A method for operating a reader to communicate with at least two transponders, comprising:
transmitting a first exciter signal;
receiving a first modulated signal from a first transponder if the first transponder receives the first exciter signal;
transmitting a second exciter signal; and
receiving a second modulated signal from a second transponder if the second transponder receives the second exciter signal.

9. The method as claimed in Claim 8, wherein the transmitting steps comprise;
transmitting a first exciter signal having a fixed frequency signal of a first duration; and
transmitting a second exciter signal having a fixed frequency signal of a second duration, the second duration being greater than the first duration.

10. The method as claimed in Claim 8 or Claim 9, further comprising the step of; receiving a third modulated signal transmitted by a third transponder while the third transponder receives the second exciter signal.

11. The method as claimed in Claims 8 to 10, further comprising frequency modulating the first modulated signal and the second modulated signal.

12. The method as claimed in Claims 8 to 11, wherein the steps of transmitting the first exciter signal and receiving the first modulated signal are repeated until a data telegram is received at the reader.

13. The method as claimed in Claims 8 to 12, further comprising the step of; transmitting the first exciter signal after receiving the second modulated signal.

14. A reader, comprising:
a transmitter operable to transmit a selected one of a first exciter signal and a second exciter signal; and
a receiver operable to receive a first modulated signal from a first transponder responding to the first exciter signal, the receiver further operable to receive a second modulated signal from a second transponder responding to the second exciter signal.

15. The reader as claimed in Claim 14, further comprising a controller coupled to the transmitter, the controller being operable to select one of a first exciter signal and a second exciter signal to be transmitted by the transmitter.

16. The reader as claimed in Claim 14 or Claim 15 further comprising; an antenna coupled to the transmitter and the receiver, the antenna being operable to transmit the first exciter signal and the second exciter signal, and to receive the first modulated signal and the second modulated signal.

17. The reader as claimed in Claims 14 to 16, further comprising:
a transmit antenna coupled to the transmitter and operable to transmit the first exciter signal and the second exciter signal; and
a receive antenna coupled to the receiver and operable to receive the first modulated signal and the second modulated signal.

18. The reader as claimed in Claims 14 to 17, wherein the receiver is operable to receive a third modulated signal transmitted by a third transponder during transmission of the second exciter signal.

19. The reader as claimed in Claims 14 to 18, wherein the transmitter comprises:
an oscillator operable to generate a periodic signal;
an amplifier having an input coupled to the oscillator, the amplifier operable to amplify the periodic signal;
an antenna coupled to an output of the amplifier; and
loading circuitry coupled to the output of the amplifier, and operable to degrade the quality of the antenna when enabled.

20. The reader as claimed in Claim 19, wherein the loading circuitry is enabled during transmission of the first exciter signal and disabled during transmission of the second exciter signal.
